# EUROPÄISCHE PATENTSCHRIFT

(11) **EP 2 076 695 B1**
(45) Veröffentlichungstag und Bekanntmachung des Hinweises auf die Patenterteilung: **23.02.2011**
(21) Anmeldenummer: 07820829.5
(22) Anmeldetag: 02.10.2007
(51) Int. Cl.: F16H 61/30

(54) **SERVOUNTERSTÜTZUNGSEINRICHTUNG FÜR KRAFTFAHRZEUG-WECHSELGETRIEBE**
SERVO ASSISTANCE DEVICE FOR MOTOR VEHICLE VARIABLE-SPEED TRANSMISSION
SYSTÈME DE SERVO-ASSISTANCE POUR UNE BOÎTE DE VITESSES DE VÉHICULE AUTOMOBILE

(30) Priorität: 12.10.2006 DE 102006048254
(43) Veröffentlichungstag der Anmeldung: 08.07.2009
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2007/060447
(87) Internationale Veröffentlichungsnummer: WO 2008/043690

(56) Entgegenhaltungen:
- WO-A-2005/119100
- WO-A-2007/101754
- DE-A1- 3 147 003

## Beschreibung

Die Erfindung betrifft eine Servounterstützungseinrichtung einer Schaltvorrichtung eines Kraftfahrzeuggetriebes nach der im Oberbegriff von Anspruch 1 näher definierten Art und ein Verfahren zur Darstellung einer kennlinie einer Servounterstützungseinrichtung einer Schaltvorrichtung eines Kraftfahrzeug getriebes nach der im Oberbegriff von Anspruch 6 näher definierten Art.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servounterstützungseinrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

In der DE 195 39 472 A1 wird eine Schaltvorrichtung mit einer Servounterstützungseinrichtung für ein Getriebe eines Kraftfahrzeugs offenbart. Eine Steuerstange der Servounterstützungseinrichtung ist axial verschiebbar innerhalb einer Kolbenstange vorgesehen und wirkt über ein Schaltgestänge mit einem Schalthebel zusammen. An der Kolbenstange ist ein beidseitig mit einem Druckmittel beaufschlagbarer Kolben angeordnet, und die Kolbenstange wirkt mit Mitteln zum Schalten des Zahnräderwechselgetriebes zusammen. Bei einer Axialverstellung der Steuerstange in der Kolbenstange sind über Betätigungskolben Steuerventile betätigbar. Die über Schalthebel und Schaltgestänge auf die Steuerstange ausgeübte Schaltkraft wird über die Kolbenstange auf die Mittel zum Schalten des Zahnräderwechselgetriebes proportional übertragen. Dabei geben die beiden Seiten der Schalteinrichtung unterschiedlich große Schaltkräfte ab, so dass verschiedene Gangstufen des Fahrzeuggetriebes mit unterschiedlichen Schaltkräften geschaltet werden können. Die unterschiedlichen Schaltkräfte werden durch unterschiedliche Ventilkennlinien, bedingt durch unterschiedlich große Kolbenflächen der Betätigungskolben und/oder durch unterschiedliche geometrische Abmessungen der beiden entgegengesetzt angeordneten Oberflächen des Kolbens erzielt.

In den nicht veröffentlichten Anmeldungen der Anmelderin mit den Aktenzeichen 10 2006 006 651.0 und 10 2006 006 652.9 wird eine Schaltvorrichtung mit Servounterstützungseinrichtung für ein Getriebe eines Fahrzeuges offenbart, die Mittel zum Wählen und zum Schalten einer Gangstufe des Getriebes und eine Steuerstange der Servounterstützungseinrichtung umfasst, auf welche die zu unterstützende Handschaltkraft einwirkt. In der nicht veröffentlichten Anmeldung mit dem Aktenzeichen 10 2006 006 651.0 sind in der Schaltvorrichtung elastische Elemente vorgesehen, um die auf die Servounterstützungseinrichtung einwirkende Handschaltkraft vor der Einleitung in die Servounterstützungseinrichtung zu verändern oder zu begrenzen. In der nicht veröffentlichten Anmeldung mit dem Aktenzeichen 10 2006 006 652.9 sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern und damit die Servounterstützungseinrichtung in ihrer Wirkung zu beeinflussen.

Um unterschiedliche Servounterstützungskräfte zu realisieren, benötigt man unterschiedliche Nachgiebigkeiten oder Elastizitäten. Dies kann je nach konstruktiver Ausführung aufwendig sein und Bauraum benötigen, welcher oftmals nicht zur Verfügung steht.

In der DE 10 2004 042 609 A1 werden Kennlinien für eine Servounterstützungseinrichtung einer Schaltvorrichtung eines Kraftfahrzeuggetriebes vorgeschlagen. Die Kennlinien weisen abhängig von einer Handschaltkraft bzw. einer Schaltungsphase Bereiche mit unterschiedlicher Steigung bzw. Proportionalität zur Handschaltkraft auf. In der DE 10 2004 042 609 A1 wird nicht offenbart, wie die Kennlinien konstruktiv realisiert werden können.

Die WO 20051119100 A beschreibt ein System zur Begrenzung einer Schaltkraft. Die auf das Gangschaltsystem von einem Schaitunterstützungssystem einwirkende Kraft soll dabei mit Hilfe einer Ventileinrichtung einen vorgegebenen Grenzwert nicht überschreiten.

Schließlich ist aus der DE 31 47 003 A1, welche alle Merkmale des Oberbegriffs des Anspruchs 1 bzw. des Anspruchs 6 offenbart, eine Servounterstützungseinrichtung einer Schaltvorrichtung eines Kraftfahrzeuggetriebes bekannt geworden, mit welcher eine Kennlinie darstellbar ist, welche in Abhängigkeit von einer Handschaltkraft bzw. einer Schaltungsphase Bereiche mit unterschiedlicher Steigung bzw. Proportionalität zur Handschaltkraft aufweist. Die Servounterstützungseinrichtung umfasst dabei eine Welle, auf die die zu unterstützende Handschaltkraft einwirkt.

Der vorliegenden Erfindung liegt die Aufgabe zugrunde, eine Servounterstützungseinrichtung einer Schaltvorrichtung eines Kraftfahrzeuggetriebes aufzuzeigen, mit welcher eine Kennlinie, welche abhängig von einer Handschaltkraft bzw. einer Schaltungsphase Bereiche mit unterschiedlicher Steigung bzw. Proportionalität zur Handschaltkraft aufweist, wegunabhängig realisiert werden kann.

Die der Erfindung zugrunde liegende Aufgabe wird durch eine, auch die kennzeichnenden Merkmale des Hauptanspruchs aufweisende, gattungsgemäße Servounterstützungseinrichtung bzw. durch ein Verfahren zur Darstellung einer Kennlinie einer Servounterstützungseinrichtung einer Schaltvorrichtung eines Kraftfahrzeuggetriebes gemäß Anspruch 6 gelöst.

Eine Servounterstützungseinrichtung einer Schaltvorrichtung eines Kraftfahrzeuggetriebes umfasst eine Steuerstange, auf die eine zu unterstützende Handschaltkraft einwirkt, eine Kolbenstange, welche mit Mitteln zum Schalten eines Zahnräderwechselgetriebes zusammenwirkt und ein Ventil, welches Ventilkolben und Ventilschieber aufweist. Erfindungsgemäß weist die Servounterstützungseinrichtung Mittel auf, um eine Kennlinie, welche in Abhängigkeit von der Handschaltkraft bzw. einer Schaltungsphase Bereiche mit unterschiedlicher Steigung bzw. Proportionalität zur Handschaltkraft aufweist, wegunab-hängig zu realisieren, also ohne dass sich die gegenwärtige Position der Steuerstange verändert. Diese Mittel sind als Schleppkolben und Schleppkolbenfeder ausgebildet. Die Schleppkolbenfeder ist derart in der Servounterstützungseinrichtung angeordnet, dass sie einerseits an einem Anschlag der Kolbenstange anliegt und andererseits den Schleppkolben gegen einen weiteren Anschlag der Kolbenstange drückt. Der Schleppkolben ist derart in der Kolbenstange angeordnet, dass er sowohl die Steuerstange als auch den Ventilkolben umgibt, welcher fest auf der Steuerstange angeordnet ist. Ab einer bestimmten Handschaltkraft wird ein geregelter Servodruck so groß, dass der Schleppkolben gegen die Schleppkolbenfederkraft auf den Ventilkolben gedrückt wird. Der Handschaltkraft bzw. Steuerstangenkraft wirkt somit sowohl die auf den Ventilkolben direkt wirkende Druckkraft entgegen, als auch die Druckkraft, welche über den Schleppkolben auf den Ventilkolben übertragen wird. Somit wird ab einer bestimmten Regelstellung die der Handschaltkraft bzw. Steuerstangenkraft entgegenwirkende Druckkraft entsprechend vergrößert. Dadurch weist die Kennlinie einen Knickpunkt auf, ab welchem sie eine kleinere Steigung aufweist und somit flacher verläuft.

Im Folgenden wird das Grundprinzip der Erfindung, welche mehrere Ausführungsformen zulässt, an Hand einer Zeichnung beispielhaft näher erläutert.

Es zeigen:
- Fig. 1: eine Schaltanlage nach dem Stand der Technik,
- Fig. 2: eine Schnittdarstellung einer Ausführungsform der Servoun- terstützungseinrichtung in Neutralstellung,
- Fig. 3: eine Schnittdarstellung einer Ausführungsform der Servoun- terstützungseinrichtung in einem steilen Kennlinienbereich,
- Fig. 4: eine Schnittdarstellung einer Ausführungsform der Servoun- terstützungseinrichtung in einem flachen Kennlinienbereich und
- Fig. 5: eine Ventilkennlinie.

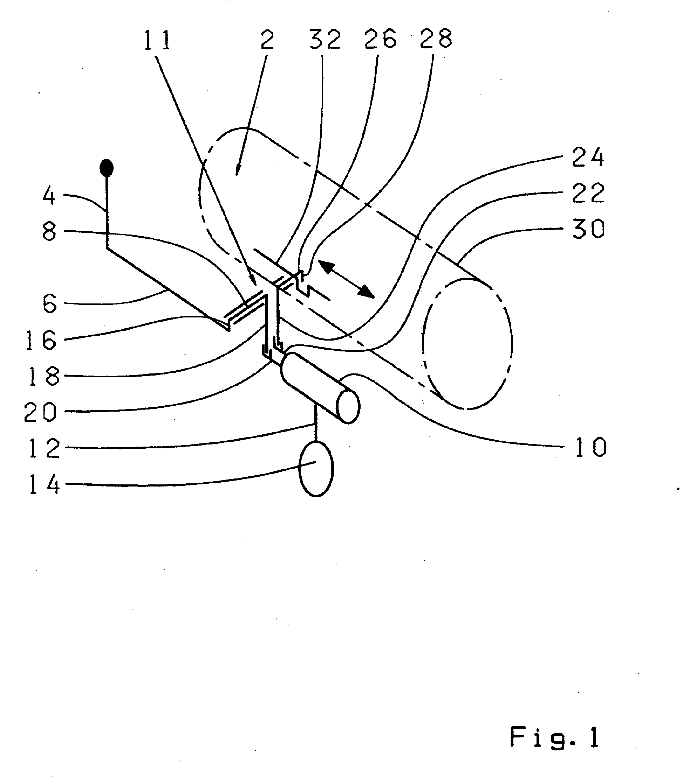

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

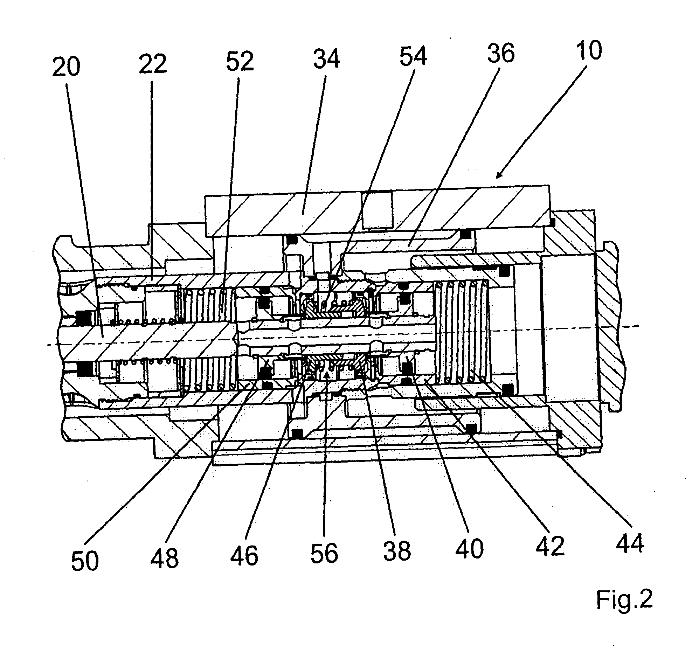

Die Fig. 2 zeigt eine Schnittdarstellung der erfindungsgemäßen Servounterstützungseinrichtung 10 in einer Neutralstellung. Die Servounterstützungseinrichtung 10 umfasst eine Steuerstange 20 und eine Kolbenstange 22 sowie einen Zylinder 34 und einen Kolben 36. Die Steuerstange 20 der Servounterstützungseinrichtung 10 ist axial verschiebbar innerhalb der Kolbenstange 22 angeordnet und wirkt über ein Schaltgestänge mit einem Schalthebel zusammen (siehe Fig. 1). Der Kolben 36 und die Kolbenstange 22 sind fest miteinander verbunden bzw. aus einem Bauteil gefertigt. Die Kolbenstange 22 wirkt mit Mitteln zum Schalten des Zahnräderwechselgetriebes zusammen (siehe Fig. 1). Ein Ventil 56 besteht aus Ventilkolben 40, 48 und Ventilschiebern 38, 46. An der Steuerstange 20 sind die Ventilkolben 40, 48 fest angeordnet, welche durch eine Betätigung der Steuerstange 20 entlang ihrer Achse ebenfalls in axialer Richtung zur Steuerstange 20 betätigt werden. Zwischen den Ventilkolben 40, 48 sind die Ventilschieber 38, 46 ebenfalls axial verschiebbar angeordnet. Die Ventilschieber 38, 46 werden durch ein Federelement 54 axial auseinander gehalten und liegen je an einem Ventilsitz der Kolbenstange 22 an. Erfindungsgemäß weist die Servounterstützungseinrichtung 10 Schleppkolben 42, 50 und Schleppkolbenfedern 44, 52 auf. Die Schleppkolben 42, 50 sind beispielsweise in Form eines Hohlzylinders ausgebildet, welcher an der der Schleppkolbenfeder 44, 52 gegenüberliegenden Seite einen in Richtung zur Steuerstange 20 hin ausgebildeten Anschlag aufweist. Der Anschlag kann beispielsweise mit dem Schleppkolben 42, 50 aus einem Bauteil gefertigt sein. Ebenso ist es denkbar, dass der Anschlag beispielsweise durch einen Sicherungsring realisierbar ist. Die Schleppkolbenfedern 44, 52 können beispielsweise als Spiralfeder oder Tellerfeder ausgebildet sein. Die Schleppkolben 42, 50 sind hier derart angeordnet, dass sie sowohl die Steuerstange 20 als auch die Ventilkolben 40, 48 umgeben und in axialer Richtung zur Steuerstange 20 verschiebbar sind. Die Schleppkolbenfedern 44, 52 liegen mit ihrem einen Ende an einem Anschlag der Kolbenstange 22 und mit ihrem anderen Ende an den Schleppkolben 42, 50 an. In nicht betätigtem Zustand der Servounterstützungseinrichtung 10, also in der Neutralstellung des Kraftfahrzeuggetriebes, liegen die Ventilschieber 38, 46 an den Ventilsitzen der Kolbenstange 22 an und die Schleppkolben 42, 50 werden durch die Schleppkolbenfedern 44, 52 gegen entsprechende Anschläge der Kolbenstange 22 gedrückt.

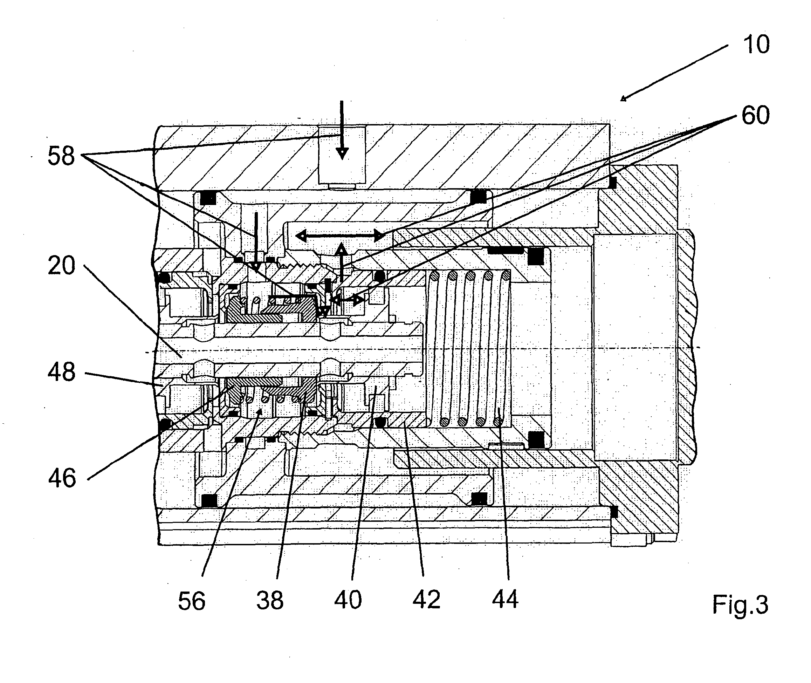

Die Fig. 3 zeigt eine Schnittdarstellung der erfindungsgemäßen Servounterstützungseinrichtung 10 für eine Regelstellung im Bereich der steilen Kennlinie. Die Steuerstange 20 wird aufgrund einer Handschaltkraft in der Zeichenblattebene nach links bewegt. Somit wird auch der fest auf der Steuerstange 20 angeordnete Ventilkolben 40 nach links bewegt. Durch den Ventilkolben 40 wird der Ventilschieber 38 betätigt, wodurch sich dieser vom Ventilsitz der Kolbenstange 22 löst und das Ventil 56 öffnet. Das geöffnete Ventil 56 regelt mittels eines vorhandenen Vorratdrucks 58 einen Servodruck 60 entsprechend zur vorherrschenden Steuerstangenkraft ein. Die durch den geregelten Servodruck 60 auf den Schleppkolben 42 wirkende Druckkraft ist kleiner als die von der Schleppkolbenfeder 44 erzeugte Kraft, wodurch der Schleppkolben 42 weiterhin am Anschlag der Kolbenstange 22 anliegt und die Schleppkolbenfeder 44 nicht komprimiert wird. Der Handschaltkraft bzw. Steuerstangenkraft wirkt somit lediglich die auf den Ventilkolben 40 wirkende Druckkraft entgegen, was einer Regelstellung im Bereich der steilen Kennlinie entspricht.

Analoges gilt für eine Betätigung der Steuerstange 20 in der Zeichenblattebene nach rechts. Hierbei wird der Ventilschieber 46 durch den Ventilkolben 48 betätigt, wodurch sich der Ventilschieber 46 vom Ventilsitz der Kolbenstange 22 löst und somit das Ventil 56 öffnet.

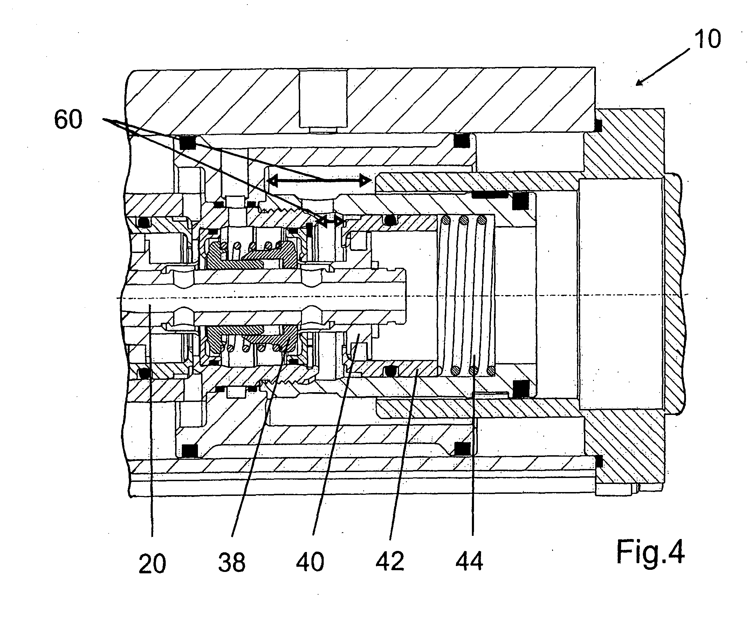

Die Fig. 4 zeigt eine Schnittdarstellung der erfindungsgemäßen Servounterstützungseinrichtung 10 für eine Regelstellung im Bereich der flacheren Kennlinie. Im Gegensatz zur Fig. 3 ist hier die Handschaltkraft entsprechend größer, wodurch die Steuerstange 20 der Servounterstützungseinrichtung 10 in der Zeichenblattebene weiter nach links bewegt wird. Somit wird der Ventilschieber 38 durch den Ventilkolben 40 ebenfalls weiter nach links verschoben, wodurch das Ventil 56 mehr öffnet: Dadurch entsteht ein entsprechend höherer Servodruck 60. Der geregelte Servodruck 60 ist nun so groß, dass die Schleppkolbenfeder 44 durch den Schleppkolben 42 komprimiert wird und der Schleppkolben 42 gegen die Kraft der Schleppkolbenfeder 44 auf den Ventilkolben 40 gedrückt wird. Der Handschaltkraft bzw. Steuerstangenkraft wirkt somit sowohl die auf den Ventilkolben 40 direkt wirkende Druckkraft entgegen, als auch die Druckkraft, welche über den Schleppkolben 42 auf den Ventilkolben 40 übertragen wird. Dadurch wird die der Handschaltkraft bzw. Steuerstangenkraft entgegenwirkende Druckkraft größer und die Kennlinie weist einen Knickpunkt auf. Diese Regelstellung entspricht dem Bereich der flacheren Kennlinie. Die Position der Steuerstange 20 und des fest mit der Steuerstange 20 verbundenen Ventilkolbens 40, 48 verändert sich hierbei nicht, wodurch die "geknickte" Kennlinie wegunabhängig realisiert wird.

Analoges gilt wiederum für eine Betätigung der Steuerstange 20 in der Zeichenblattebene nach rechts.

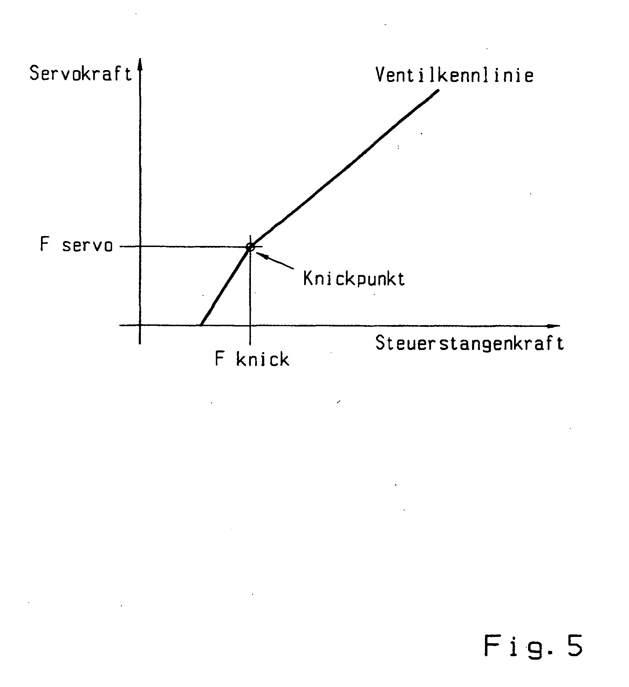

In der Fig. 5 wird die Servokraft als Funktion der Steuerstangenkraft dargestellt. Die durch die erfindungsgemäße Servounterstützungseinrichtung 10 realisierbare Ventilkennlinie weist einen Knickpunkt auf, ab welchem der Verlauf der Kennlinie weniger steil ist, um die an einer Schaltung beteiligten Bauteile zu schonen.

Ist die Steuerstangenkraft kleiner als F_knick, dann reicht der eingeregelte Servodruck 60 nicht aus, um den Schleppkolben 42, 50 gegen die Kraft der Schleppkolbenfeder 44, 52 zu bewegen. Der geregelte Servodruck 60 wirkt lediglich auf den Ventilkolben 40, 48. Somit wirkt ausschließlich die hierbei entstehende Druckkraft als Reaktionskraft der Steuerstangenkraft entgegen. Diese Regelstellung entspricht dem Bereich der steilen Kennlinie.

Wird die Handschaltkraft gesteigert bis die Steuerstangenkraft größer als F knick ist, so wird der Schleppkolben 42, 50 durch den größeren Servodruck 60 gegen die Kraft der Schleppkolbenfeder 44, 52 auf den Ventilkolben 40, 48 gedrückt. Somit addiert sich zu der bisher auf die Steuerstange 20 als Reaktionskraft wirkenden Druckkraft des Ventilkolbens 40, 48 die durch den Schleppkolben 42, 50 auf den Ventilkolben 40, 48 wirkende Druckkraft (Druckkraft, welche durch den Servodruck 60 auf den Schleppkolben 42, 50 wirkt abzüglich der Kraft der Schleppkolbenfeder) hinzu. Damit entspricht der Bereich der Steuerstangenkraft größer F_knick der flacheren Kennlinie. Der Knickpunkt der Kennlinie kann je nach Auslegung der Schleppkolbenfeder (44, 52) entsprechend festgelegt werden.

Durch die erfindungsgemäße Servounterstützungseinrichtung 10 kann eine "geknickte" Kennlinie realisiert werden, ohne dass sich die Position der Steuerstange 20 und des fest mit der Steuerstange 20 verbundenen Ventilkolbens 40, 48 verändert. An der Steuerstange 20 erfolgt lediglich eine minimale Regelbewegung, welche von einem Fahrzeugführer an dessen Hand über den Schalthebel nicht wahrnehmbar ist.

Zu Beginn einer Schaltung wird eine ausreichende Servounterstützungskraft gewährleistet, wobei während einer Synchronphase eine Servounterstützungskraft erzeugt wird, welche die an der Schaltung beteiligten Bauteile bzw. die Synchronisierungen nicht überlastet.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 34: Zylinder
- 36: Kolben
- 38: Ventilschieber
- 40: Ventilkolben
- 42: Schleppkolben
- 44: Schleppkolbenfeder
- 46: Ventilschieber
- 48: Ventilkolben
- 50: Schleppkolben
- 52: Schleppkolbenfeder
- 54: Federelement
- 56: Ventil
- 58: Vorratsdruck
- 60: geregelter Servodruck

## Patentansprüche

1. Servounterstützungseinrichtung (10) einer Schaltvorrichtung eines Kraftfahrzeuggetriebes, mit welcher eine Kennlinie darstellbar ist, welche in Abhängigkeit von einer Handschaltkraft bzw. einer Schaltungsphase Bereiche mit unterschiedlicher Steigung bzw. Proportionalität zur Handschaltkraft aufweist und die Servounterstützungseinrichtung (10) ein Element (20) umfasst, auf das die zu unterstützende Handschaltkraft einwirkt, wobei das Element (20) als Steuerstange der Servounterstützungseinrichtung (10) ausgebildet ist und die Servounterstützungseinrichtung (10) eine Kolbenstange (22), welche mit Mitteln zum Schalten eines Zahnräderwechselgetriebes zusammenwirkt und ein Ventil (56) umfasst, welches einen Ventilkolben (40, 48), der fest auf der Steuerstange (20) angeordnet ist, und einen Ventilschieber (38, 46) aufweist und zur Darstellung der Kennlinie in der Servounterstützungseinrichtung (10) ein mit dem Ventil (56) zusammenwirkender Schleppkolben (42, 50) und eine Schleppkolbenfeder (44, 52) vorhanden sind, auf die ein Servodruck (60) wirkt, wobei die Steuerstange (20) ihre gegenwärtige Position beibehält, **dadurch gekennzeichnet, dass** der Schleppkolben (42, 50) innerhalb der Kolbenstange (22) angeordnet ist, die Steuerstange (20) und den Ventilkolben (40, 48) umgibt und an einem Anschlag der Kolbenstange (22) anliegt.

2. Servounterstützungseinrichtung (10) nach Anspruch1, **dadurch gekennzeichnet, dass** die Schieppkolbenfeder (44, 52) einerseits an einem Anschlag der Kolbenstange (22) anliegt und andererseits mit dem Schleppkolben (42, 50) in Verbindung steht.

3. Servounterstützungseinrichtung (10) nach Anspruch 1 oder 2, **dadurch gekennzeichnet, dass** der Schleppkolben (42, 50) in Form eines Hohlzylinders ausgebildet ist und an der der Schleppkolbenfeder (44, 52) gegenüberliegenden Seite einen in Richtung zur Steuerstange (20) hin ausgebildeten Anschlag aufweist.

4. Servounterstützungseinrichtung (10) nach einem der vorangegangenen Ansprüche, **dadurch gekennzeichnet, dass** die Schleppkolbenfeder (44, 52) als Spiralfeder oder Tellerfeder ausgebildet ist.

5. Servounterstützungseinrichtung (10) nach einem der vorangegangenen Ansprüche, **dadurch gekennzeichnet, dass** je nach Auslegung der Schleppkolbenfeder (44, 52) der Knickpunkt der Kennlinie festlegbar ist.

6. Verfahren zur Darstellung einer Kennlinie einer Servounterstützungseinrichtung (10) einer Schaltvorrichtung eines Kraftfahrzeuggetriebes, wobei die Kennlinie abhängig von einer Handschaltkraft bzw. einer Schaltungsphase Bereiche mit unterschiedlicher Steigung bzw. Proportionalität zur Handschaltkraft aufweist und die Senrounterstützungseinrichtung (10) ein Element (20) umfasst, auf das eine zu unterstützende Handschaltkraft einwirkt, wobei in der Servounterstützungseinrichtung (10) Schleppkolben (42, 50) und Schleppkolbenfedern (44, 52) ab einem entsprechenden Servodruck (60) betätigt werden und mit einer Kolbenstange (22), welche mit Mitteln zum Schalten eines Zahnräderwechseigetriebes zusammenwirkt, und einem Ventil (56), welches einen Ventilkolben (40, 48), der fest auf dem Element (20) angeordnet ist, und einen Ventilschieber (38, 46) aufweist, zusammenwirken, wobei die Position des Elements (20) ausgebildet als Steuerstange der Servounterstützungseinrichtung (10), beibehalten wird, **dadurch gekennzeichnet, dass** der Schleppkolben (42, 50) in nicht betätigtem Zustand durch die Schleppkolbenfieder (44, 52) an einen Anschlag der Kolben- stange (22) gedrückt wird

7. Verfahren nach Anspruch 6, **dadurch gekennzeichnet, dass** der Schleppkolben (42, 50) in betätigtem Zustand gegen die Schleppkolbenfeder (44, 52) auf den Ventilkolben (40, 48) gedrückt wird.

8. Verfahren nach Anspruch 6 oder 7, **dadurch gekennzeichnet, dass** je nach Auslegung der Schleppkolbenfeder (44, 52) der Knickpunkt der Kennlinie entsprechend festgelegt wird.

## Claims

1. Servo assistance device (10) of a selector apparatus of a motor-vehicle gearbox, by way of which servo assistance device (10) a characteristic curve can be produced which has regions with a different gradient or proportionality with respect to the manual shifting force as a function of a manual shifting force or a shifting phase, and the servo assistance device (10) comprises an element (20), on which the manual shifting force to be assisted acts, the element (20) being configured as a control rod of the servo assistance device (10), and the servo assistance device (10) comprising a piston rod (22), which interacts with means for shifting a gearwheel change-speed gearbox, and a valve (56) which has a valve piston (40, 48), which is arranged fixedly on the control rod (20), and a valve slide (38, 46), and, in order to produce the characteristic curve in the servo assistance device (10), there are a dragging piston (42, 50), which interacts with the valve (56), and a dragging-piston spring (44, 52), on which a servo pressure (60) acts, the control rod (20) retaining its present position, **characterized in that** the dragging piston (42, 50) is arranged within the piston rod (22), surrounds the control rod (20) and the valve piston (40, 48) and bears against a stop of the piston rod (22).

2. Servo assistance device (10) according to Claim 1, **characterized in that** the dragging-piston spring (44, 52) firstly bears against a stop of the piston rod (22) and secondly is connected to the dragging piston (42, 50).

3. Servo assistance device (10) according to Claim 1 or 2, **characterized in that** the dragging piston (42, 50) is configured in the form of a hollow cylinder and, on the side which lies opposite the dragging-piston spring (44, 52), has a stop which is formed in the direction of the control rod (20).

4. Servo assistance device (10) according to one of the preceding claims, **characterized in that** the dragging-piston spring (44, 52) is configured as a helical spring or disc spring.

5. Servo assistance device (10) according to one of the preceding claims, **characterized in that** the bend point of the characteristic curve can be fixed depending on the design of the dragging-piston spring (44, 52).

6. Method for producing a characteristic curve of a servo assistance device (10) of a selector apparatus of a motor-vehicle gearbox, the characteristic curve having regions with a different gradient or proportionality with respect to the manual shifting force as a function of a manual shifting force or a shifting phase, and the servo assistance device (10) comprising an element (20), on which a manual shifting force to be assisted acts, the dragging pistons (42, 50) and the dragging-piston springs (44, 52) being actuated in the servo assistance device (10) above a corresponding servo pressure (60) and interacting with a piston rod (22), which interacts with means for shifting a gearwheel change-speed gearbox, and a valve (56) which has a valve piston (40, 48), which is arranged fixedly on the element (20), and a valve slide (38, 46), the position being retained of the element (20) which is configured as control rod of the servo assistance device (10), **characterized in that** the dragging piston (42, 50) is pressed by the dragging-piston spring (44, 52) onto a stop of the piston rod (22) in the non-actuated state.

7. Method according to Claim 6, **characterized in that** the dragging piston (42, 50) is pressed counter to the dragging-piston spring (44, 52) onto the valve piston (40, 48) in the actuated state.

8. Method according to Claim 6 or 7, **characterized in that** the bend point of the characteristic curve is fixed correspondingly depending on the design of the dragging-piston spring (44, 52).

## Revendications

1. Système d'assistance par asservissement (10) d'un dispositif de changement de vitesse d'une boîte de vitesses d'un véhicule automobile, avec lequel une courbe caractéristique peut être produite, laquelle présente, en fonction d'une force de changement de vitesse manuelle ou d'une phase de changement de vitesse, des zones différentes de pente ou de proportionnalité par rapport à la force de changement de vitesse manuelle et le système d'assistance par asservissement (10) comprenant un élément (20) sur lequel agit la force de changement de vitesse manuelle à assister, l'élément (20) étant réalisé sous forme de tige de commande du système d'assistance par asservissement (10) et le système d'assistance par asservissement (10) présentant une tige de piston (22), qui coopère avec des moyens pour commuter une boîte de vitesses à engrenages et comprend une soupape (56), qui présente un piston de soupape (40, 48) qui est disposé fixement sur la tige de commande (20) et un coulisseau de soupape (38, 46), et, pour la production de la courbe caractéristique dans le système d'assistance par asservissement (10), un piston d'entraînement (42, 50) coopérant avec la soupape (56) et un ressort de piston d'entraînement (44, 52) étant prévus, sur lesquels agit une pression d'assistance (60), la tige de commande (20) conservant sa position actuelle, **caractérisé en ce que** le piston d'entraînement (42, 50) est disposé à l'intérieur de la tige de piston (22), entoure la tige de commande (20) et le piston de soupape (40, 48) et s'applique contre une butée de la tige de piston (22).

2. Système d'assistance par asservissement (10) selon la revendication 1, **caractérisé en ce que** le ressort de piston d'entraînement (44, 52) s'applique d'une part contre une butée de la tige de piston (22) et est d'autre part en liaison avec le piston d'entraînement (42, 50).

3. Système d'assistance par asservissement (10) selon la revendication 1 ou 2, **caractérisé en ce que** le piston d'entraînement (42, 50) est réalisé sous forme de cylindre creux et présente, sur le côté opposé au ressort de piston d'entraînement (44, 52), une butée réalisée dans la direction de la tige de commande (20).

4. Système d'assistance par asservissement (10) selon l'une quelconque des revendications précédentes, **caractérisé en ce que** le ressort de piston d'entraînement (44, 52) est réalisé sous forme de ressort spiral ou de ressort Belleville.

5. Système d'assistance par asservissement (10) selon l'une quelconque des revendications précédentes, **caractérisé en ce que** l'on peut établir le point d'inflexion de la courbe caractéristique en fonction de la conception du ressort de piston d'entraînement (44, 52).

6. Procédé pour produire une courbe caractéristique d'un système d'assistance par asservissement (10) d'un dispositif de changement de vitesse d'une boîte de vitesses de véhicule automobile, dans lequel la courbe caractéristique présente, en fonction d'une force de changement de vitesse manuelle ou d'une phase de changement de vitesse, des zones différentes de pente ou de proportionnalité par rapport à la force de changement de vitesse manuelle et le système d'assistance par asservissement (10) comprend un élément (20) sur lequel agit la force de changement de vitesse manuelle à assister, le piston d'entraînement (42, 50) et le ressort de piston d'entraînement (44, 52) dans le système d'assistance par asservissement (10) étant actionnés à partir d'une pression d'assistance correspondante (60), et coopérant avec une tige de piston (22), qui coopère avec des moyens pour commuter une boîte de vitesses à engrenages, et une soupape (56), qui présente un piston de soupape (40, 48) qui est disposé fixement sur l'élément (20), et un coulisseau de soupape (38, 46), la position de l'élément (20), réalisée sous forme de tige de commande du système d'assistance par asservissement (10), étant conservée, **caractérisé en ce que** le piston d'entraînement (42, 50), dans l'état non actionné, est pressé par le ressort de piston d'entraînement (44, 52) contre une butée de la tige de piston (22).

7. Procédé selon la revendication 6, **caractérisé en ce que** le piston d'entraînement (42, 50), dans l'état actionné, est pressé contre le ressort de piston d'entraînement (44 ,52) sur le piston de soupape (40, 48).

8. Procédé selon la revendication 6 ou 7, **caractérisé en ce que** le point d'inflexion de la courbe caractéristique est fixé de manière correspondante en fonction de la conception du ressort de piston d'entraînement (44, 52).
